# EUROPÄISCHE PATENTANMELDUNG

(11) **EP 1 479 470 A1**
(43) Veröffentlichungstag der Anmeldung: **24.11.2004**
(21) Anmeldenummer: 04011117.1
(22) Anmeldetag: 11.05.2004
(51) Int. Cl.: B23D 45/08, B23D 45/06, B28D 1/04, B23D 47/12

(54) **Stationäre Schneidmaschine mit Schneidring**

(30) Priorität: 19.05.2003 DE 10322849
(71) Anmelder: Hartmut, Weisser, 72365 Ratingen (DE)
(72) Erfinder: Hartmut, Weisser, 72365 Ratingen (DE)
(74) Vertreter: Patentanwälte Rüger, Barthelt & Abel

(57) **Zusammenfassung**

Eine Trennschleifmaschine für keramisches Material weist einen in einem Maschinengestell drehbar gelagerten Schneidring auf. Der Schneidring wird an seinem Innenumfang durch insgesamt vier Führungsrollen geführt, von denen zwei unterhalb und zwei oberhalb der Werkstückauflage angeordnet sind. Der Antrieb des Schneidrings geschieht von der Seite oder Flanke her mit Hilfe eines Reibrads.

Das Kühlmittel gelangt an den Schneidring mit Hilfe einer gesonderten Pumpe. Der Schneidring selber taucht in den Kühlmittelzuber nicht ein.

## Beschreibung

Aus dem DE 200 22 482 U1 ist eine stationäre Schneidmaschine mit Schneidring bekannt, die dazu eingerichtet ist mineralisches Material, wie Keramikfliesen und dergleichen, zu bearbeiten.

Die bekannte Schneidmaschine weist ein Gestell auf, in dem ein Auflagetisch für das Werkstück vorgesehen ist. Unterhalb des Auflagetisches läuft ein endloser Zahnriemen über mehrere Umlenkrollen um, von denen eine durch einen Motor angetrieben ist. Auf der glatten Rückseite des Zahnriemens steht ein Schneidring auf, der unterhalb der Werkstückauflage durch insgesamt vier achsparallele Rollen gegen den Riemen angedrückt gehalten wird. Hierdurch umschlingt der Riemen den Schneidring über einen Umfangswinkel von ca. 120 Grad. Außerdem sind unterhalb des Auflagetisches an derjenigen Seite des Rings von der aus das Werkstück zugeführt wird, zwei seitliche Führungsrollen vorhanden, die an der Flanke des Schneidrings ansetzen. Weitere Führungsrollen befinden sich oberhalb des Auflagetisches in einem Arm.

Um das Werkstück und den Schneidring, der an seiner Außenumfangsfläche mit einem abrasiven Material, beispielsweise Diamantbeschichtet ist, während des Schneidvorgangs zu kühlen, ist die bekannte Schneidmaschine mit einem Kühlmittelsumpf versehen, in dem der Zahnriemen eintaucht, um so das Kühlmittel zu dem Schneidring zu transportieren.

Die Menge des zugeführten Kühlmittels hängt bei der bekannten Schneidmaschine sehr stark davon ab, wo der Wasserstand in der Auffangwanne ist.

Die Einjustierung der Andruckrollen, die über den Umfangswinkel von 120 Grad verteilt sind, ist nicht unproblematisch, da aufgrund der Vielzahl der Anlagestellen die Anordnung mehrfach statisch überbestimmt ist. Je nach dem dynamischen Verhalten sorgen nur wenige Rollen tatsächlich für den Andruck und der Ring tendiert unter Umständen dazu, in Vorschubrichtung auszuweichen.

Schließlich ist wegen der Vielzahl der Rollen und ihrer Anordnung gegenüber dem antreibenden Zahnriemen das Auswechseln eines abgenutzten Schneidrings nicht besonders handlich.

Der Riemenantrieb hat zudem den Nachteil, dass im Laufe der Zeit der Scheidring auch den Riemen von der Rückseite her in Längsrichtung durchtrennt. Im Allgemeinen tritt das vollständige Durchtrennen während der Schneidarbeit auf, so dass schlagartig der Schneidring seine Führung in den Führungsrollen verliert, sich verkantet und zerstört wird.

Der eintauchende Riemen schleppt auf seiner Oberseite ständig eine verhältnismäßig große Menge Wasser mit, die auch als Schmiermittel zwischen dem Riemen und dem Schneidring wirkt. Dadurch entsteht ständig ein Schlupf, der das Durchschneiden des Riemens begünstigt und dazu führt, dass bei großer Belastung der Schneidring schlicht stehen bleibt, mit der entsprechenden nachteiligen Folge für den Riemen selbst an der Kontaktstelle mit dem Schneidring.

Der eintauchende Riemen erzeugen einen erheblichen Nebel unterhalb der Werkstückauflage und transportiert die beim Schneiden auftretenden Keramikpartikel in die Lager der Führungsrollen, die dadurch sehr schnell zerstört werden.
Ausgehend hiervon ist es Aufgabe der Erfindung, eine Schneidmaschine zu schaffen, die bedienerfreundlicher ist.

Diese Aufgabe wird erfindungsgemäß mit der stationären Schneidmaschine für mineralische Werkstücke mit dem Merkmalen des Anspruches 1 gelöst.

Bei der erfindungsgemäßen Schneidmaschine sind wenigstens zwei Führungsrollen in dem Gestell gelagert, die Führungsnuten enthalten. Mit diesen Führungsnuten nehmen die Führungsrollen den Schneidring am Innenrand auf. Diese Anordnung kommt mit maximal vier Führungsrollen aus, um den Schneidring zuverlässig zu lagern. Dadurch wird es möglich durch Herausnehmen von lediglich zwei Führungsrolle den Schneidring zu entnehmen und gegen einen neuen auszutauschen. Insbesondere ist das Auswechseln deswegen besonders einfach, weil keine seitlichen zusätzlichen Führungsrollen vorgesehen sind, zwischen die der Schneidring eingefädelt werden muss.

Eine weitere Vereinfachung bei der Handhabung ergibt sich durch die Verwendung des Reibradantriebs für den Schneidring. Der Reibradantrieb liegt an der Flanke des Schneidrings auf und behindert so das Auswechseln in keiner Weise. Es genügt hier einfach den Motor mit dem Reibrad zur Seite zu drücken um den Ring frei zu bekommen. Der Ring kann nach unten entnommen werden.

Da bei der neuen Schneidmaschine die Führungsrollen auch einen verhältnismäßig sehr großen Abstand voneinander haben, gesehen in Umfangsrichtung bzw. Laufrichtung des Schneidrings, haben geringfügige Lageabweichungen von der idealen Kreisform keinen nennenswerten Einfluss auf die Führung des Schneidrings. Insbesondere kann der Schneidring nicht in gefährlicher Weise verspannt werden, wenn eine der Führungsrollen radial über dem idealen Laufkreis geringfügig übersteht. Wegen des großen Abstands kann der Schneidring einer leichten Verdrückung ohne weiteres folgen.

Eine sehr gute Führung wird erhalten, wenn der Schneidring durch insgesamt vier Führungsrollen gelagert ist. Von diesen sind einige unterhalb der Werkstückauflage und andere oberhalb der Werkstückauflage in dem Gestell angeordnet.

Das Auswechseln des Schneidrings wird vereinfacht, wenn die Führungsrollen fliegend gelagert sind. Die Schrauben und Muttern sind leichter zugänglich.

Um die Führungsrollen auch oberhalb des Schneidrings einfach zu lagern, weist das Gestell einen Arm auf, der mit Abstand oberhalb der Werkstückauflage verläuft und der sich über der Durchtrittsöffnung für den Schneidring befindet. In diesem Arm können ein oder zwei Führungsrollen gelagert sein.

Besonders gute Schneidergebnisse werden erhalten, wenn die Rotationsachse des Schneidrings etwa mit der Werktischauflage zusammenfällt oder auch geringfügig darunter liegt.

Die Geräuschentwicklung der Schneidmaschine wird von dem Aufbau der Führungsrollen mit bestimmt. Die Laufgeräusche werden klein, wenn zumindest einige Führungsrollen in radialer Richtung sandwichartig aufgebaut sind, wobei eine Zwischenlage aus einem dämpfenden Material besteht. Die beim Schneiden auftretenden Schwingungen werden auf diese Weise von dem Gestell fern gehalten und können nicht über das Gestell abgestrahlt werden.

Der Führungsring selbst sollte aus einem wiederstandsfähigen Material sein. Günstige Materialien sind Polyamid, Delrin und PTFE.

Vorteilhafterweise befindet sich unterhalb des Auflagetisches noch eine Trennwand oder Schott. Die Wand verläuft rechtwinklig zu der von dem Schneidring definierten Ebene und hindert das Kühlmittel daran von dem Schneidring weg in Richtung auf den hinter der Trennwand befindlichen Motor geschleudert zu werden. Der Motor befindet sich vollständig im Trockenen.

Die Mitnahmewirkung durch das Reibrad wird verbessert, wenn das Reibrad einen Reifen bzw. eine Lauffläche aufweist, die aus einem elastomeren Material besteht. Das Reibrad ist im vorliegenden Falle einfach zylindrisch. Die Unterschiede in der Umfangsgeschwindigkeit am Schneidring sind wegen der geringen Dicke des Reibrades und dem großen Durchmesser des Schneidrings zu vernachlässigen und werden durch das elastomere Material letztlich kompensiert.

Der Motor ist zur Regulierung der Anpresskraft verstellbar gehaltert. Eine sehr platzsparende Halterung wird erreicht, wenn der Motor um eine Achse schwenkbar ist, die rechtwinklig zu der Motorachse verläuft. Dadurch ist es möglich, den Motor auf eine Platte zu stellen, auf der er in der erforderlichen Weise verstellbar ist.

Dem Reibrad gegenüber ist eine Gegendruckrolle vorhanden, um die Seitenkraft des Reibrades aufzunehmen, ohne den Ring zu verdrücken.

Auch die Gegendruckrolle kann eine einfache zylindrische Rolle sein, die starr in dem Gestell, vorzugsweise an der Trennwand gelagert ist.

Die erfindungsgemäße Schneidmaschine arbeitet bevorzugt nicht mit einem in einen Wassersumpf eintauchenden Schneidring. Ein Eintauchen des Schneidrings hätte den Nachteil, dass unterhalb des Werkstücktisches ein starker Wassernebel entsteht. Dieser Wassernebel würde die Schleifpartikel enthalten, die beim Schneiden des Keramikwerkstoffs anfallen. Der so belastete Wassernebel würde in die Lagerstellen eindringen und alsbald die Lagerung der Führungsrollen beschädigen. Außerdem wäre der Schneidring sehr nass bevor er mit dem Reibrad des Antriebs in Berührung kommt. Dadurch wären die Antriebskräfte verringert und es bestünde die Gefahr des Stehenbleibens des Rings bei hohen Schnittkräften. Dieser Effekt tritt beim Stand der Technik auf, weil dort der antreibende Zahnriemen auf der Oberseite ständig stark benetzt ist. Andererseits ist Wasser ein verhältnismäßig gutes Schmiermittel für viele elastomere Werkstoffe.

Bei der erfindungsgemäßen Schneidmaschine ist eine separate Kühlmittelpumpe vorgesehen, die aus einem Sumpf das Kühlmittel ansaugt und bevorzugt an den Schneidring an einer Stelle abgibt, die, bezogen auf die Laufrichtung des Schneidrings hinter dem Reibrad liegt. Dadurch wird erreicht, dass ein möglichst trockener Schneidring mit dem Reibrad in Eingriff kommt. Die Kühlmittelmenge reicht aus, um hinreichend den Schneidvorgang zu kühlen.

Zudem hat die Zuführung des Kühlmittels an dieser Stelle den Vorteil, dass das Kühlmittel nicht durch das Reibrad von dem Ring bereits abgequetscht wird. Es gelangt eine optimale Menge von Kühlmittel an die Schneidstelle. Die Menge die dort ankommt verhindert einen größeren Wassernebel unterhalb der Werkstückauflage in der Auffangwanne.

Durch die Verwendung der Kühlmittelpumpe wird es auch möglich, in der Auffangwanne die Partikel sedimentieren zu lassen, womit nur weitgehend sauberes Wasser erneut als Kühlmittel Verwendung findet. Durch die Kühlmittelpumpe läuft praktisch kein verunreinigtes Wasser hindurch.

Im Übrigen sind Weiterbildungen der Erfindung Gegenstand von Unteransprüchen. Beim Studium des bevorzugten Ausführungsbeispiels wird auch klar, dass eine Reihe von Abwandlungen möglich sind.

In der Zeichnung ist ein Ausführungsbeispiel des Gegenstandes der Erfindung dargestellt. Es zeigen:
- Fig. 1: die erfindungsgemäße Schneidmaschine in einer Seitenansicht und teilweise aufgeschnitten,
- Fig. 2: die Lagerung und den Aufbau einer der unteren Führungsrollen, in einem axialen Schnitt,
- Fig. 3: eine Stirnansicht auf den Antriebsmotor unter Veranschaulichung der Motorbefestigung und
- Fig. 4: den Friktionsantrieb des Reibrings in einer schematisierten Stirnansicht auf das Friktionsrad

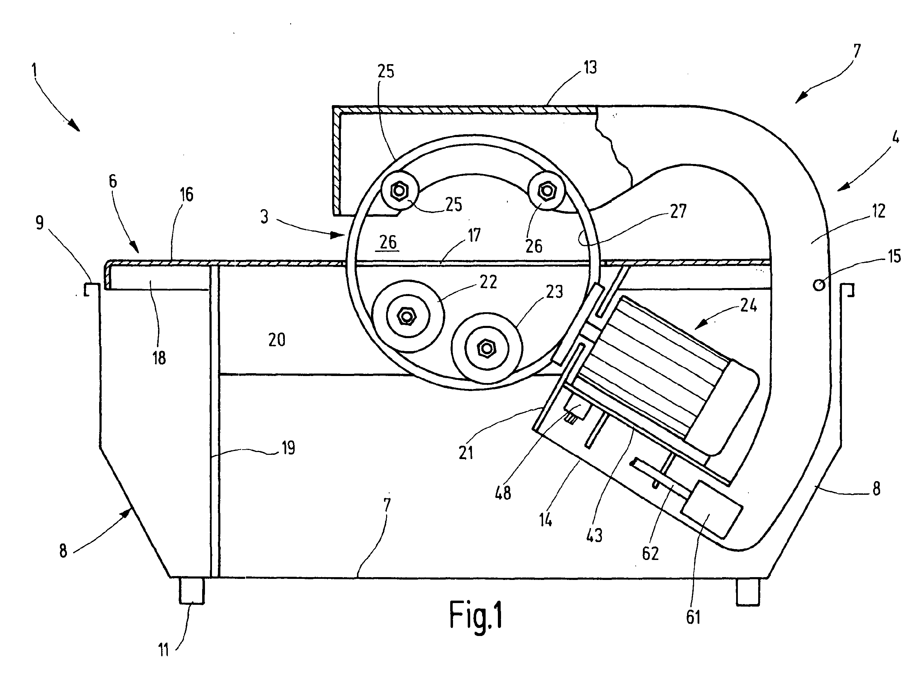

Fig. 1 zeigt in einer teilweise aufgebrochenen Seitenansicht eine stationäre Schneidermaschine 1 zum Schneiden von mineralischem Material in Gestalt von Fliesen, Steinplatten und dergleichen.

Die Schneidemaschine 1 weist ein Gestell 2 auf, in dem ein Scheidring 3 drehbar gelagert ist. Zu dem Gestell 2 gehören ein Gestellbügel 4, der zum Teil in eine Maschinenwanne 5 eintaucht, sowie ein Werkstückauflagetisch 6.

Die Maschinenwanne 5 setzt sich aus einem Boden 7 und einer Seitenwand 8 zusammen, die oben an einem nach außen umgebogenen Rand 9 endet. Mit Hilfe von Aufstellfüßen 11 steht die Wanne auf dem Boden.

Der Gestellbügel 4 setzt sich aus einem Rückenteil 12, einem oberen Arm 13 sowie einem unteren Arm 14 zusammen. Der Gestellbügel 12 ist, wie die aufgebrochene Darstellung im vorderen Bereich des oberen Arms 13 zeigt, weitgehend doppelwandig.

Der Rückenteil 12 des Gestellbügels 4 ist mittels einer Achse 15, die durch den Rückenteil 12 hindurch führt in nicht weiter gezeigten Scharnierlaschen schwenkbar gelagert, die an der Innenseite der Wand 8 in der Nähe des oberen Randes 9 befestigt sind. Die Schwenkachse, die durch die Achse 15 definiert ist, verläuft horizontal und parallel zu der Drehachse des Schneidrings 3.

An dem Rückenteil 12 ist ferner mit dem rückwärtigen Ende der Auflagetisch 6 befestigt, der im Wesentlichen aus einer ebenen Platte 16 besteht, die an der entsprechenden Stelle einen Durchlassschlitz 17 für den Schneidring 3 enthält. An den Rändern ist die Platte 16 nach unten umgebogen ist, wo sie einen Versteifungsrand 18 bildet.

Zufolge der Anordnung verläuft der Arm 13 mit Abstand oberhalb des Auflagetischs 6.

Von der Unterseite der Platte 16 geht eine Stützwand 19 vertikal nach unten, die sich auf dem Boden 7 der Maschinenwanne 5 aufstützt. Im Zusammenwirken mit der Achse 15 wird hierdurch der Werkstückauflagetisch 6 in der horizontalen Stellung gehalten. Andererseits kann der Werkstückauflagetisch 6 jederzeit hochgeschwenkt werden, um Zugang zu dem Inneren der Wanne 5 und den Bauteilen unterhalb des Werkstückauflagetisches 6 zu bekommen.

Unterhalb der Platte 16 befindet sich ferner eine Trägerwand 20, die von der vorderen Stützwand 19 ausgeht und bis zu einer hinteren Trennwand 21 führt. Die Trägerwand 20 bildet eine vertikale, zu der Auflagefläche 16 rechtwinklige Montagefläche für zwei Führungsrollen 22 und 23.

Die Trennwand 21 verläuft, wie gezeigt, schräg und aus der Sicht des Benutzers hinter dem Schneidring 3 in einem kurzen radialen Abstand von diesem.

Auf der von dem Schneidring 3 abliegenden Seite der Trennwand 21 befindet sich ein Antriebsmotor 24.

Zur Lagerung des Schneidrings 3 oberhalb des Werkstückauflagetischs 6 sind noch zwei weitere Führungsrollen 25 und 26 vorhanden, die zwischen den Seitenwänden des doppelwandigen oberen Arms 13 gelagert sind.

Sämtliche Führungsrollen 22, 23, 25, 26 sind fliegend auf derselben Seite gelagert.

Mit Hilfe der insgesamt vier Führungsrollen 22, 23, 25, 26 die achsparallel zueinander sind, wird der Schneidring 3 drehbar gelagert. Er erstreckt sich zum Teil oberhalb und zum Teil unterhalb des Werstückauflagetischs 6.

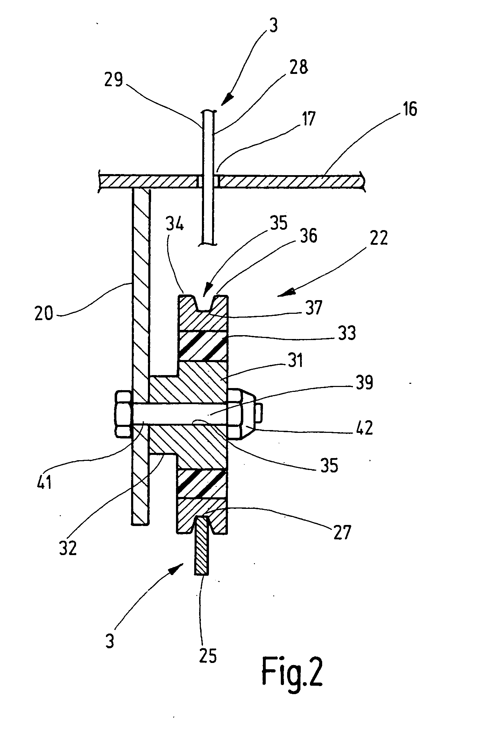

Der Schneidring 3 weist eine mit einem abrasiven Material, beispielsweise Diamantkörnern, beschichtete Außenumfangsfläche 25 sowie eine kreisrunde zentrale Öffnung 26 auf, die von einem glatten Rand bzw Innenumfangsflächen 27 begrenzt ist. Seitlich wird der Schneidring 3 von zwei ebenen, ringförmigen Flankenflächen 28 und 29 begrenzt, die in Fig. 2 zu erkennen sind.

Der Aufbau und die Lagerung der Führungsrollen wird anhand der Fig. 2 exemplarisch in Verbindung mit der Führungsrolle 22 erläutert.

Die Führungsrolle 22 weist eine beispielsweise aus Aluminium oder Kunststoff bestehende Nabe 31 auf, die auf einer Seite mit einem zylindrischen Fortsatz 32 versehen ist. Auf der Außenumfangsfläche der Nabe 31 sitzt ein aus einem elastomeren Dämpfungsmaterial bestehender Dämpfungsring 33, der wiederum einen Führungsring 34 trägt. Der Führungsring 34 besteht aus einem abriebfesten Kunststoffmaterial, beispielsweise Polyamid, Delrin oder PTFE. Er enthält mittig eine umlaufende, im Querschnitt etwa trapezförmige Führungsnut 35, die von zwei Nutenflanken 36 und einem ebenen Nutengrund 37 begrenzt ist.

Durch die Nabe 31 führt koaxial zu der Führungsnut 35 eine Lagerbohrung 38, die einen Lagerzapfen 39 aufnimmt. Der Lagerzapfen 39 dient als Achse und wird von einer Schraube gebildet, die durch eine Bohrung 41 in der Trägerwand 20 hindurch führt. Auf der der Trägerwand 20 abliegenden Seite ist zur Sicherung eine selbstsichernde Mutter 42 aufgeschraubt.

Die Führungsrolle 23 hat den identischen Aufbau, wie er für die Führungsrolle 22 erläutert ist. Auch die Führungsrollen 25 und 26 entsprechen in ihrem Aufbau dem Aufbau der Führungsrolle 22; eine erneute Erläuterung ist deswegen entbehrlich. Ihre Lagerung entspricht der Lagerung, wie sie in Fig. 2 erläutert ist, allein mit dem Unterschied, dass sie an einer Seitenwand des oberen Arms 13, wie gezeigt, befestigt sind.

Die unterhalb des Werkstückauflagetisches 6 befindlichen Führungsrollen 22 und 23 haben einen etwas größeren Durchmesser als die Führungsrollen 25 und 26.

Sämtliche Führungsrollen 22, 23, 25 und 26 sind, wie bereits erwähnt, achsparallel und ihre Führungsnuten 35 liegen in einer gemeinsamen Ebene und zwar so, dass ihr von einem gedachten Mittelpunkt am weitesten ausliegenden Stellen auf einer Kreisbahn entsprechend dem Rand 27 des Schneidrings 3 liegen.

Der zum Antrieb des Schneidrings 3 vorgesehene Antriebsmotor 24 steht auf dem unteren Arm 14 des Gestellbügels 4. Der Gestellbügel 4 trägt hierzu auf seinem unteren Arm 14 eine zur Seite auskragende rechteckige Montageplatte 43, die von der hinteren Trennwand 21 auf der von dem Schneidring 3 abliegenden Seite ausgeht. Diese bildet mit der hinteren Trennwand 21 eine rechten Winkel.

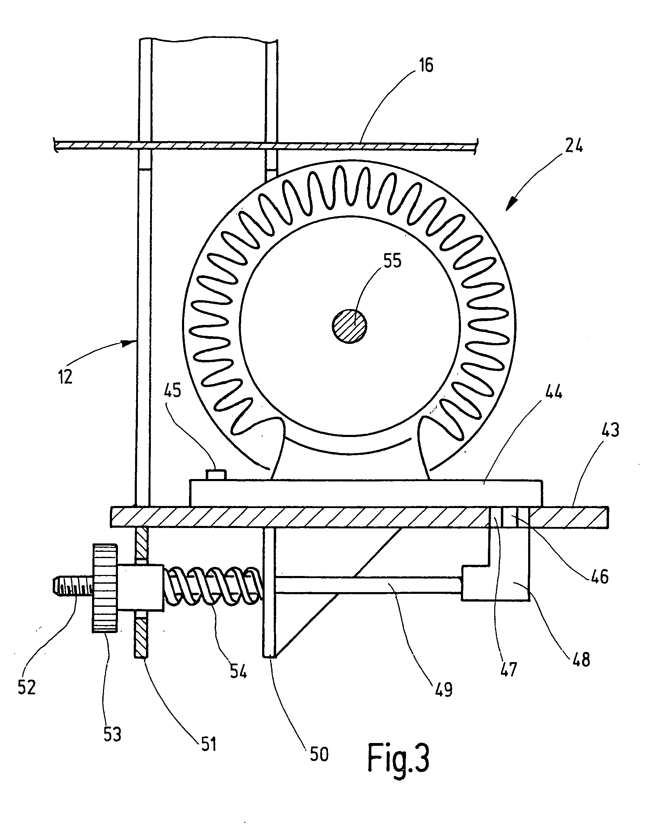

Fig. 3 zeigt eine Stirnansicht auf den Motor 24, aus der Sicht hinter der Trennwand 21. Wie hieraus zu ersehen ist, steht der Motor 24 mit seiner Sockelplatte 44 flach auf der Montageplatte 43. Die Montageplatte 43 trägt einen nach oben aufragenden Scharnierzapfen 45, der durch eine Montagebohrung mit der Sockelplatte 44 hindurch führt. Der Scharnierzapfen 45 befindet sich ungefähr auf der vertikalen Mittelebene des Gestellbügels 4 in der Nähe des hinteren Endes des Motors 24. Auf diese Weise ist der Motor 24 um den Scharnierzapfen 45 schwenkbar, und zwar in einer Ebene, die durch die Lage der Oberseite der Montageplatte 43 vorgegeben ist.

Bezüglich der Sockelplatte 44 diagonal gegenüber liegend zu dem Scharnierzapfen 45, ist ein Zapfen 46 vorgesehen, der in der Sockelplatte 44 verankert ist und durch ein Langloch 47 in der Montageplatte 43 hindurch führt. Das Langloch 47 ist bogenförmig, wobei der Krümmungsmittelpunkt die Achse des Scharnierzapfens 45 darstellt.

Auf dem Zapfen 46 sitzt ein Winkelstück 48, von dem eine Zugstange 49 ausgeht. Die Zugstange 49 verläuft parallel zu der Unterseite der Montageplatte 43 in Richtung auf eine Wand 50 des unteren Armteils 14, zu dem auch eine zweite dazu parallele Wand 51 gehört. Die Zugstange 49 führt durch eine entsprechend nicht sichtbarer Bohrung in der Wand 50 hindurch.

Die Zugstange 49 ist mit einem Gewinde 52 versehen, auf das eine von Hand verstellbare Rändelmutter 53 aufgeschraubt ist. Mit Hilfe der Rändelmutter 53 stützt sich die Zugstange 49 an einer Schraubendruckfeder 54 ab, die gegen die Wand 50 anliegt. Mittels der Schraubendruckfeder 54 wird der Motor 24 nachgiebig in Richtung auf die vertikale Mitteleben des Gestellbügels 4 vorgespannt, wobei die Drehachse der Scharnierzapfen 45 ist. Die Achse des Scharnierzapfens 45 verläuft rechtwinklig zu der Motorachse, die wiederum parallel zu der Auflagefläche der Montageplatte 43 ausgerichtet ist.

Auf der Motorwelle 55, die durch eine entsprechende Öffnung in der hinteren Trennwand 21 hindurch ragt, sitzt ein Reibrad 56 drehfest, das reibschlüssig mit der Flanke 28 des Schneidrings 3 in Eingriff steht. Der Motor 24 ist so ausgerichtet, dass die Motorwelle 55 auf einer Verlängerung eines Radius des Schneidrings 3 liegt.

Das Reibrad 56 setzt sich aus einer beispielsweise aus Metall bestehenden Nabe 57 und einem Ring 58 aus elastomeren Material zusammen. Das elastomere Material des Rings 58 verhindert Geräusche, die durch den Reibkontakt zwischen dem Reibrad 56 und dem Schneidring 3 sonst zustande kommen könnten.

Mit Hilfe der anhand von Fig. 3 erläuterten Vorspanneinrichtung wird das Reibrad 56 ständig gegen den Schneidring 3 gedrückt. Damit sich dieser nicht seitlich verformt, sitzt dem Reibrad 56 bezüglich des Schneidrings 3 unmittelbar gegenüber eine Wiederlagerolle 59, die achsparallel zu dem Reibrad 56 auf der hinteren Trennwand 21 gelagert ist. Auch die Wiederlagerrolle 59 kann mit einem geräuschmindernden Material auf der Außenumfangsfläche beschichtet sein.

Stationäre Schneidmaschinen der beschriebenen Art erfordern ein Kühlmittel. Bei der erfindungsgemäßen Schneidmaschine 1 wird das Kühlmittel mit Hilfe einer Kühlmittelpumpe 61 aus der Wanne 5 angesaugt. Über eine Schlauchoder Rohranordnung 62 wird das angesaugte Kühlmittel einer Auslassdüse 63 zugeführt, die durch nicht weiter veranschaulichte Befestigungsmittel auf der hinteren Trennwand 21 befestigt ist.

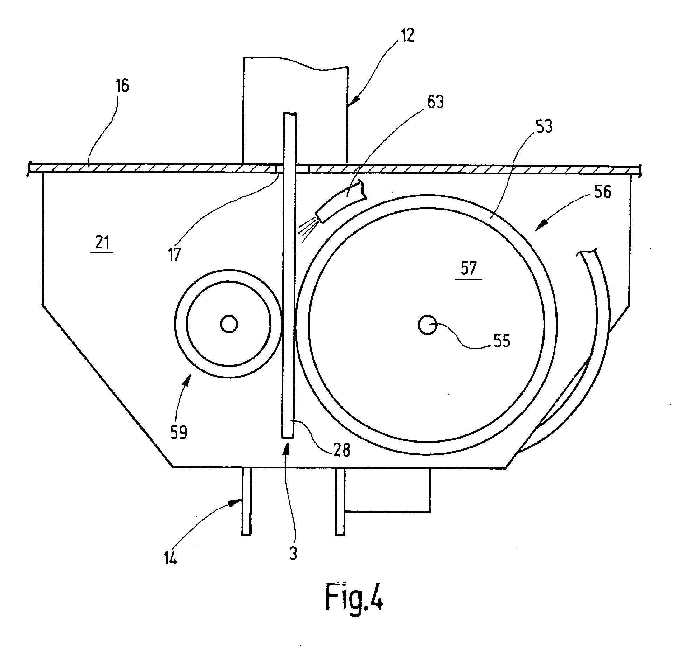

Die Auslassdüse 63 sitzt, wie Fig. 4 zeigt, in Laufrichtung des Schneidrings 3 gesehen hinter der Friktionsrolle 46, das heißt, zwischen der Friktionsrolle 56 und der Unterseite des Werkstückauflagetisches 6. Durch geeignete Überlaufeinrichtungen wird der Flüssigkeitsstand in der Maschinenwanne 5 tiefer gehalten als beispielsweise die am tiefsten liegenden Stelle des Motors 24. Diese Ebene liegt deutlich unterhalb dem tiefsten Punkt des Schneidrings 3. Das bedeutet, dass in keiner Betriebssituation der Schneidring 3 jemals in den Wassersumpf in der Maschinenwanne 5 eintauchen kann.

Durch Einschalten des Antriebsmotors 24 und der Kühlmittelpumpe 61, wird die Schneidmaschine 1 in Gang gesetzt. Der Schneidring läuft im Betrieb so, dass er auf der Zufuhrseite des Werkstücks, das heißt zwischen den Führungsrollen 25 und 22 von oben nach unten läuft. Dabei nimmt der Schneidring 3 das aus der Düse 63 austretende Kühlwasser mit, um die Schnittstelle am Werkstück und den Ring 3 an dieser Stelle zu kühlen. Das mitgerissene Wasser wird unterhalb des Werkstückauflagetisches 6 in die Maschinenwanne 5 geschleudert.

Selbst Wasser, das erst im großen Abstand von dem Schlitz 17 von dem Schneidring 3 abgeschleudert wird, kann bestenfalls die hintere schräg verlaufende Trennwand 21 treffen, die den Motor 24 wirksam gegen Spritzwasser abschirmt.

Da der Schneidring 3 nicht in das Kühlmittel eintaucht, wird es auch nicht kontinuierlich umgerührt. Die in dem zurücklaufenden Kühlmittel enthaltenen Partikel des Werkstücks können in der Maschinenwanne 5 hinreichend sedimentieren. Bei einer bevorzugten Ausführungsform hat die Maschinenwanne 5 ein Aufnahmevolumen von ca 40 Litern. Es bleibt genügend Zeit zum Sedimentieren, ehe das Kühlmittel erneut über die Kühlmittelpumpe 61 angesaugt wird.

Es versteht sich, dass die Ansaugöffnung der Kühlmittelpumpe 61 einen hinreichenden Abstand von dem Boden 7 hat, um mit Sicherheit das ansaugen von Sediment zu vermeiden.

Das Auswechseln eines abgenutzten Schneidrings 3 geschieht, indem der Werkstückauflagetisch 6 samt dem Gestellbügel 2 um die Achse 15 nach oben geschwenkt wird. Durch Herausnehmen der oberen beiden Führungsrollen 25 und 26 kann der Schneidring 3 nunmehr ohne weiteres nach unten, das heißt im aufgeklappten Zustand nach vorne unten durch den Schlitz 17 herausgezogen werden. Ein neuer Schneidring wird in der entsprechenden umgekehrten Richtung eingesetzt. Anschließend werden die oberen Führungsrollen 25 und 26 wieder montiert, ohne Justagearbeiten zu erfordern.

Die gezeigte Art des Friktionsantriebs, der seitlich an dem Schneidring 3 angreift, eröffnet auch die Möglichkeit der Verwendung von segmentierten Schneidringen 3. Solche segmentierte Schneidringe 3 verfügen über einzelne Diamanten enthaltene Segmente, die auf einem ringförmigen Träger sitzen. Derartige Schneidringe gestatten einen etwas größeren Materialabtrag und damit eine etwas höhere Vorschubgeschwindigkeit.

Der Durchmesser des Schneidrings 3, mit dem die erfindungsgemäße Schneidmaschine 1 arbeitet, liegt zwischen 30 cm und 120 cm. Bei einer radialen Ringstärke von ca. 10 mm bis 20 mm. Die Schnittbreite beträgt ca. 2 mm.

Ein weiterer Vorteil der erfindungsgemäßen Schneidmaschine besteht in der geringen Geräuschentwicklung. Da von dem "Schneidblatt" lediglich der äußere Ring vorhanden ist, fehlt die sonst bei Fliesenschneidmaschinen übliche Fläche, über die Schall direkt von der Trennscheibe abgestrahlt wird.

Eine Trennschleifmaschine für keramisches Material weist einen in einem Maschinengestell drehbar gelagerten Schneidring auf. Der Schneidring wird an seinem Innenumfang durch insgesamt vier Führungsrollen geführt, von denen zwei unterhalb und zwei oberhalb der Werkstückauflage angeordnet sind. Der Antrieb des Schneidrings geschieht von der Seite oder Flanke her mit Hilfe eines Reibrads.

Das Kühlmittel gelangt an den Schneidring mit Hilfe einer gesonderten Pumpe. Der Schneidring selber taucht in den Kühlmittelzuber nicht ein.

## Patentansprüche

1. Stationäre Schneidmaschine (1) für mineralische Werkstücke,
mit einem Gestell (2),
mit wenigstens zwei Führungsrollen (22,23,25,26), die in dem Gestell (2) achsparallel drehbar gelagert sind und von denen jede eine Führungsnut (35) aufweist, wobei die Führungsnuten (35) in einer gemeinsamen Ebene liegen,
mit einem flachen Schneidring (3), der seitlich von zwei ebenen Flanken (28,29) begrenzt ist, der eine zu seiner Außenumfangseite (25) konzentrische Öffnung (26) mit einem glatten Rand (27) aufweist, der mit dem Rand (27) seiner Öffnung (26) in den Führungsnuten (35) der wenigsten zwei Führungsrollen (22,23,25,26) läuft und dadurch in dem Gestell (2) seitlich geführt um eine Achse () drehbar gelagert ist, die zu dem Schneidring (3) konzentrisch ist, und dessen Außenumfangsseite (25) mit einem abrasiven Material versehen ist,
mit einem Auflagetisch (6), der in dem Gestell (2) gehaltert ist, der eine im Wesentlichen ebene horizontale Werkstückauflagefläche () bildet, der eine Durchtrittsöffnung (17) für den Schneidring (3) aufweist, aus der der Scheidring (3) nach oben durch die Werkstückauflagefläche () vorsteht, und
mit einem Antriebsmotor (24), der auf seiner Motorwelle (55) ein Reibrad (56) trägt, das reibschlüssig mit einer der seitlichen Flanken (28,29) des Schneidrings (3) in Eingriff steht.

2. Schneidmaschine nach Anspruch 1, **dadurch gekennzeichnet, dass** insgesamt vier Führungsrollen (22,23,25,26) in dem Gestell (2) achsparallel gelagert sind.

3. Schneidmaschine nach Anspruch 1, **dadurch gekennzeichnet, dass** einige Führungsrollen (22,23) unterhalb der Werkstückauflage (6) und andere Führungsrollen (25,26) oberhalb der Werkstückauflage (6) in dem Gestell (2) angeordnet sind.

4. Schneidmaschine nach Anspruch 1, **dadurch gekennzeichnet, dass** sämtliche Führungsrollen (22,23,2,5,26) auf derselben Seite des Schneidrings (3) fliegend gelagert sind.

5. Schneidmaschine nach Anspruch 1, **dadurch gekennzeichnet, dass** das Gestell (2) einen Arm (13) aufweist, der mit Abstand oberhalb der Werkstückauflagefläche (6) verläuft und sich über der Durchtrittsöffnung (17) für den Schneidring (3) befindet.

6. Schneidmaschine nach Anspruch 5, **dadurch gekennzeichnet, dass** in dem Arm (13) wenigstens eine Führungsrolle (25,26), vorzugsweise zwei Führungsrollen (), drehbar gelagert sind.

7. Schneidmaschine nach Anspruch 1, **dadurch gekennzeichnet, dass** die Drehachse () des Schneidrings (3) etwa auf der Höhe der Werkstückauflage (6) verläuft.

8. Schneidmaschine nach Anspruch 1, **dadurch gekennzeichnet, dass** wenigstens eine der Führungsrollen (22,23,25,26) eine Nabe (31) aufweist, die von einem Dämpfungsring (33) umgeben ist, auf der ein Führungsring (34) sitzt, der die Führungsnut (35) enthält.

9. Schneidmaschine nach Anspruch 8, **dadurch gekennzeichnet, dass** zumindest der Führungsring (34) aus Polyamid oder Delriem oder PTSE besteht.

10. Schneidmaschine nach Anspruch 1, **dadurch gekennzeichnet, dass** das Gestell (2) unterhalb des Auflagetisches (6) eine Trennwand (21) aufweist und dass auf der einen Seite der Trennwand (21) der Schneidring (3) und auf der anderen Seite der Motor (24) angeordnet ist, der mit seiner Motorwelle (55) durch die Trennwand (21) hindurchragt.

11. Schneidmaschine nach Anspruch 1, **dadurch gekennzeichnet, dass** das Reibrad (56), das auf der Motorwelle (55) sitzt, eine Lauffläche (58) aus einem elastomeren Material aufweist.

12. Schneidmaschine nach Anspruch 11, **dadurch gekennzeichnet, dass** das Reibrad (56) ein zylindrisches Reibrad ist.

13. Schneidmaschine nach Anspruch 11, **dadurch gekennzeichnet, dass** der Motor (24) verstellbar gehaltert ist derart, dass das Reibrad (56) von dem Schneidring (3) weg und auf den Schneidring (3) zu bewegbar ist.

14. Schneidmaschine nach Anspruch 1, **dadurch gekennzeichnet, dass** der Motor (24) schwenkbar gelagert ist.

15. Schneidmaschine nach Anspruch 1, **dadurch gekennzeichnet, dass** die Achse (55), bezüglich der der Motor (24) schwenkbar ist, rechtwinklig zu der Motorwelle (55) verläuft.

16. Schneidmaschine nach Anspruch 1, **dadurch gekennzeichnet, dass** der Motor (24) auf einer Platte (43) sitzt auf der er bezüglich einer zu der Platte (43) rechtwinkligen Achse (45) schwenkbar ist.

17. Schneidmaschine nach Anspruch 1, **dadurch gekennzeichnet, dass** dem Motor (24) eine Vorspanneinrichtung (49,53,54) zugeordnet ist, um das Reibrad (56) nachgiebig gegen den Schneidring (3) vorzuspannen.

18. Schneidmaschine nach Anspruch 1, **dadurch gekennzeichnet, dass** dem Reibrad (56) gegenüber auf der anderen Seite des Schneidrings (3) eine Widerlagerrolle (59) in dem Gestell (2) drehbar gelagert ist.

19. Schneidmaschine nach Anspruch 18, **dadurch gekennzeichnet, dass** die Widerlagerrolle (59) eine zylindrische Rolle () ist.

20. Schneidmaschine nach Anspruch 18, **dadurch gekennzeichnet, dass** die Widerlagerrolle (59) an ihrer Außenumfangsfläche () mit einem elastomeren Belag () versehen ist.

21. Schneidmaschine nach Anspruch 1, **dadurch gekennzeichnet, dass** sie eine Kühlmittelpumpe (61) aufweist.

22. Schneidmaschine nach Anspruch 1, **dadurch gekennzeichnet, dass** das Gestell (2) mit einer Kühlmittelwanne (5) versehen ist, um das Kühlmittel aufzufangen.

23. Schneidmaschine nach Anspruch 1, **dadurch gekennzeichnet, dass** der Schneidring (3) außerhalb eines in einem Kühlmittelsumpf () befindlichen Kühlmittels läuft.

24. Schneidmaschine nach Anspruch 1, **dadurch gekennzeichnet, dass** die Kühlmittelpumpe (61) einen Kühlmittelauslass (63) aufweist, der das Kühlmittel, bezogen auf die Laufrichtung des Schneidrings (3), dem Schneidring (3) das Kühlmittel hinter dem antreibenden Reibrad (56) zuführt.
